# EUROPÄISCHE PATENTSCHRIFT

(11) **EP 1 514 810 B1**
(45) Veröffentlichungstag und Bekanntmachung des Hinweises auf die Patenterteilung: **16.09.2009**
(21) Anmeldenummer: 04105135.0
(22) Anmeldetag: 27.09.2000
(51) Int. Cl.: B65D 81/05, B29C 49/00, B31D 5/00

(54) **Kunststoffschlauch zur Herstellung gasgefüllter Füllkörper sowie Vorrichtung zur Befüllung**
Plastic tube for manufacturing of air-filled bodies and filling device
Tuyau plastique pour fabrication de corps remplis de gaz et dispositif pour remplissage

(43) Veröffentlichungstag der Anmeldung: 16.03.2005
(62) Teilanmeldung aus: 00969230.2
(73) Patentinhaber: Lörsch, Johannes, 47638 Straelen (DE)
(72) Erfinder: Lörsch, Johannes, 47638 Straelen (DE)
(74) Vertreter: Bonsmann, Joachim Bernhard

(56) Entgegenhaltungen:
- EP-A- 0 561 097
- EP-A- 1 022 234

## Beschreibung

Die vorliegende Erfindung betrifft einen Kunststoffschlauch zur Herstellung gasgefüllter Füllkörper entsprechend dem Oberbegriff des Patentanspruches 1 sowie eine Befüllungsvorrichtung gemäß dem Oberbegriff des Patentanspruches 5.

Gasgefüllte Füllkörper dienen zur Polsterung von Gegenständen in Transportkisten, um Erschütterungen oder Beschädigungen der transportierten Gegenstände zu vermeiden. Die Füllkörper werden erst unmittelbar vor ihrem Gebrauch mit Gas gefüllt und können daher sehr platzsparend zum Verpacker bzw. Verbraucher geliefert und bei diesem gelagert werden. Ein weiterer Vorteil der Füllkörper liegt darin, dass sie aufgrund ihres geringen Gewichtes das Verpackungsgewicht kaum erhöhen und nach ihrem Einsatz sortenrein recycelt werden können, da sie üblicherweise aus einem einzigen Kunststoffmaterial hergestellt sind.

Bekannt ist es, die Füllkörper aus einer Kunststofffolie herzustellen, die als Schlauch geblasen, dann als Flachschlauch auf eine Rolle aufgewickelt und in dieser Form dem Abnehmer zugeführt wird. Beim jeweiligen Abnehmer wird dieser Flachschlauch von der Rolle als flaches Material einer Maschine zugeführt, die in bestimmten Abständen den Schlauch in Querrichtung perforiert. Mit Greifern, beispielsweise mit Vakuumgreifern, werden dann die beiden Flachseiten des Schlauches auseinandergezogen, so dass durch die Perforation hindurch Luft in den Schlauch eindringen kann. In diesem luftgefüllten Zustand werden die Ober- und die Unterfolie beidseits der Perforation mittels einer Schweißnaht luftdicht miteinander verbunden, wodurch die luftgefüllten Füllkörper bzw. Beutel ausgebildet werden. An der Perforation werden die Füllkörper vom Schlauch abgerissen, um sie ihrer jeweiligen Verwendung zuzuführen. Nachteilig hierbei ist, dass die beim Abnehmer erforderliche Maschine technisch relativ aufwendig und kostenintensiv ist. Insbesondere liegen die Perforations- und Schweißwerkzeuge nah beieinander, was deren Austausch erschwert. So ist eine Verwendung unterschiedlich breiter Kunststofffolien sowie eine Ausbildung in Schlauchlängsrichtung unterschiedlich langer Füllkörper mit erheblichem Aufwand verbunden, da die Schweißnahtlänge und/oder deren Abstand zueinander jeweils angepasst werden muss.

Aus der EP 1 022 234 A1 ist ein Kunststoffschlauch der eingangs erwähnten Art bekannt (vgl. Fig. 2A).

Aus der DE 34 42 396 A1 ist ein allseits geschlossener Kunststoffschlauch bekannt, der mittels einer Art Injektionseinrichtung befüllt wird, wobei die durch die Injektionseinrichtung eingebrachte Öffnung anschließend verschweißt wird. Das bekannte Konzept erfordert recht aufwendige und teure Befüllungsvorrichtungen, da bei diesen Vorrichtungen die kleinen Injektionsöffnungen durch Niederhalten der Folie gegenüber der Umgebung abgedichtet werden und zum Erreichen einer zufriedenstellenden Füllrate mit relativ hohen Drücken beaufschlagt werden müssen, wodurch in der Regel ein Kompressor zur Drucklufterzeugung erforderlich wird.

Ausgehend hiervon liegt der Erfindung die Aufgabe zugrunde, einen Kunststoffschlauch zur Herstellung gasgefüllter Füllkörper, welcher einfach herzustellen und flexibel befüllbar ist. Ferner soll eine entsprechende Befüllungsvorrichtung bereitgestellt werden.

Die Aufgabe wird erfindungsgemäß durch einen Kunststoffschlauch zur Herstellung gasgefüllter Füllkörper mit den Merkmalen des Patentanspruches 1 gelöst. Vorteilhafte Ausgestaltungen der Erfindung sind in den Patentansprüchen 2 bis 4 beschrieben. Ferner wird zur Lösung der vorgenannten Aufgabe eine Befüllungsvorrichtung gemäß Patentanspruch 5 vorgeschlagen.

Durch die Verwendung des vorstehend beschriebenen Kunststoffschlauches werden die beim Abnehmer durchzuführenden Arbeiten deutlich reduziert, wobei ein vorkonfektionierter Kunststoffschlauch nicht nennenswert kostenaufwendiger ist als vorbekannte Schläuche, da Kunststoffschläuche im Rahmen der Vorkonfektionierung in mehreren parallelen Bahnen hergestellt werden können, beispielsweise in doppelter Breite. In die Füllkörper muss nur noch Gas seitlich eingeblasen werden und die seitliche Gas-Einfüllöffnung durch eine Schweißnaht in Längsrichtung des Schlauches geschlossen werden. Hierdurch kann die Vorrichtung bzw. Maschine zur Herstellung gasgefüllter Füllkörper zum einen einfacher ausgebildet sein und zum anderen an die Herstellung unterschiedlich großer Füllkörper leicht angepasst werden. Ein Trennen von Oberfolie und Unterfolie mittels eines Werkzeugs ist nicht zwingend erforderlich. Dieses Trennen wird bereits durch das Einblasen des Gases bewirkt. Da die Gasbefüllung von einem Längsrand aus erfolgt und auch nur eine einzige Schweißeinrichtung vorgesehen sein muss, die auch an diesem Längsrand angeordnet ist und lediglich zur Verschweißung der Gas-Einfüllöffnung ausgelegt sein muss, können problemlos unterschiedlich breite Kunststoffschläuche verarbeitet werden. Über die Breite der Kunststofffolie hinweg müssen keine Ar-beiten durchgeführt werden, so dass auch entsprechende Vorrichtungsteile, wie beispielsweise Perforiermesser oder entsprechende Schweißwerkzeuge, nicht vorhanden sind und daher auch nicht angepasst oder ausgetauscht werden müssen. Auch die Abmessungen der Füllkörper in Schlauchlängsrichtung können ohne weiteres variiert werden, da entweder immer nur eine gleich breite Gas-Einfüllöffnung geschlossen werden muss oder das entsprechende Schweißwerkzeug sehr einfach ausgetauscht werden kann. Das Schweißwerkzeug ist problemlos zugänglich, da keine weiteren Werkzeuge in unmittelbarer Nähe vorhanden sind. Eine entsprechende Vorrichtung ist daher kostengünstiger und auch wartungsfreundlicher als bekannte Vorrichtungen. Es muss lediglich eine Schweißnaht erzeugt werden, und dies immer an der gleichen Stelle, so dass auch Qualitätsschwankungen der Schweißnaht reduziert werden und eine gleichbleibend hohe Schweißqualität gewährleistet wird.

Jede Tasche kann auf der Seite des zweiten Längsrandes völlig offen oder zum Teil durch eine Schweißnaht in Längsrichtung gasdicht verschlossen sein. Der freibleibende Teil bildet jeweils die Gas-Einfüllöffnung aus. Denkbar ist beispielsweise, dass diese Schweißnaht auf der Seite des zweiten Längsrandes sich von einem Schweißnahtpaar aus beidseits bis zu einem vorgegebenen Abstand zu den nächsten Schweißnahtpaaren erstreckt, wobei durch diesen Abstand jeweils die Gas-Einfüllöffnung ausgebildet wird.

Im Rahmen der Erfindung ist in dem Zwischenraum jedes Schweißnahtpaares eine Perforation angeordnet, die ein einfaches Abtrennen der gefüllten Beutel erlaubt. Alternativ könnte die Trennung der Beutel auch durch ein Schneidemesser oder eine an einer Vorrichtung zur Befüllung der Kunststoffschläuche vorgesehene Schneidekante erfolgen.

Bevorzugt sind in dem Raum zwischen dem zweiten Längsrand und den benachbarten Enden der quer verlaufenden Schweißnähte Markierungen zur Anzeige der Lage dieser Schweißnähte angeordnet. Mit diesen Maßnahmen wird eine ansonsten erforderliche, aufwendige Synchronisation der Vorrichtung vermieden. Die Markierungen sind bevorzugt als Ausstanzungen ausgebildet, könnten aber auch in gleichfalls bevorzugter Weise aufgedruckt sein.

Im Rahmen der Erfindung sind weiterhin Markierungen mit codierten Informationen über die Beschaffenheit der Kunststoffschläuche ausgestanzt. Dadurch kann eine Vorrichtung zum Befüllen der erfindungsgemäßen Kunststoffschläuche die Art der gerade in die Vorrichtung eingelegten Folie (z.B. Folienstärke, Material, Abmessungen) erfassen und so verschiedene Betriebsparameter automatisch anpassen, wie z.B. Schweißzeit- und Temperatur, Füllmenge bzw. Füllzeit, Transportgeschwindigkeit und Transportstrecken usw.

Weiterhin können im Bereich der Perforation zumindest in der Nähe der Längsränder Ausstanzungen zum Eingreifen eines Dorns für den Weitertransport des Schlauchs vorgesehen sein. Der Kunststoffschlauch kann so auf einfache Weise durch die Vorrichtung hindurchgeführt werden.

Besonders einfach wird das Befüllungsverfahren, wenn Luft in die Taschen eingeblasen wird, z.B. als Pressluft oder mittels eines Faltenbalgs.

Vorzugsweise ist bei einer Befüllungsvorrichtung die Düse in die Gas-Einfüllöffnung jeder Tasche einführbar, wobei ganz besonders bevorzugt zwischen der Düse und dem Rand der Gas-Einfüllöffnung keine Abdichtung vorgesehen ist. Hierdurch wird der Kostenaufwand weiter reduziert, allerdings sind sehr hohe Fülldrücke aufgrund der Leckagen nicht möglich.

Bevorzugt weist die Gasbefüllungseinrichtung eine Aufweitungseinrichtung auf, durch die Ober- und Unterfolie im Bereich der Gas-Einfüllöffnung voneinander abgehoben werden, wobei durch den so entstandenen Kanal Luft oder ein anderes Füllgas in die Gas-Einfüllöffnung jeder Tasche eingefüllt wird. Die Aufweitungseinrichtung kann dabei die Form einer dünnen Platte aufweisen, die zwischen Ober- und Unterfolie eingreift, wobei sich die Dicke der Platte in Längsrichtung vergrößert, wodurch Ober- und Unterfolie bei einer Transportbewegung des Schlauches voneinander abgehoben werden. Im Bereich der größten Plattendicke befindet sich an der der Tascheninnenseite zugewandten Stirnseite der Platte ein Luftauslass, durch den die Taschen befüllt werden. Bei einem Weitertransport nimmt die Dicke der Platte ab, so dass Oberund Unterfolie - einen entsprechenden Gegendruck von der Außenseite vorausgesetzt - wieder aufeinander gelangen.

Die vorstehend beschriebenen Codierungen an dem Schlauch werden bei einer erfindungsgemäßen Befüllungsvorrichtung über entsprechende Erkennungseinrichtungen detektiert und die Vorrichtung entsprechend gesteuert (hinsichtlich Maschinengeschwindigkeit und/oder Gasfüllmenge und/oder Schweißzeit).

Bevorzugt ist die Schweißeinrichtung weiterhin mit einer Auflagefläche versehen, auf der der Schlauch im Bereich der Gas-Einfüllöffnung der Tasche auflegbar ist und die einen dem zweiten Längsrand zugewandten hochliegenden Abschnitt und einen der Tasche zugewandten tiefliegenden Abschnitt aufweist, und mit zwei in Querrichtung beidseits des Schweißwerkzeuges angeordneten Niederhaltern, deren einer über dem hochliegenden Abschnitt und deren anderer über dem tiefliegenden Abschnitt angeordnet ist, wobei die Niederhalter in ihrer Wirkstellung an der Oberfolie anliegen und diese und die Unterfolie auf dem hochliegenden Abschnitt aufeinanderdrücken und wobei der über dem tiefliegenden Abschnitt angeordnete Niederhalter dabei einen Spalt zwischen Oberfolie und Unterfolie belässt. Die Oberfolie wird so im Schweißbereich auf sichere Weise vollständig auf die Unterfolie gedrückt, da das Gas in den Spalt ausweichen kann.

Bevorzugt weist die Transporteinrichtung Magnet- oder Pneumatikaktuatoren auf, die jeweils in dem Zwischenraum zwischen den Schweißnähten eines Schweißnahtpaares an dem Schlauch angreifen. Diese Aktuatoren können Teil einer Klammer sein, die die Kunststofffolie über eine Spindel von der Rolle zieht.

In einer ebenfalls bevorzugten, alternativen Ausführungsform weist die Transporteinrichtung Dorne auf, die in Ausstanzungen des Schlauchs eingreifen können.

In einer Ausführungsform kann die erfindungsgemäße Vorrichtung den Schlauch taktweise transportieren, d.h. Befüllung und Schweißvorgang finden jeweils bei stillstehendem Schlauch statt; anschließend wird der Schlauch um eine Taschenlänge weitertransportiert.

Es ist bei dieser Ausführungsform zur Steigerung der Arbeitsgeschwindigkeit auch denkbar, dass mehrere Taschen - bevorzugt zwei nebeneinanderliegende - jeweils gleichzeitig befüllt bzw. zugeschweißt werden.

In einer alternativen Ausführungsform ist vorgesehen, dass der Schlauch kontinuierlich transportiert und durch eine Gasbefüllungseinrichtung der vorstehend beschriebenen Art kontinuierlich mit Gas befüllt und anschließend von einer kontinuierlich arbeitenden Schweißeinrichtung, bevorzugt einem Heizband, zugeschweißt wird.

Die Erfindung wird nachfolgend anhand der Zeichnungen beispielshalber näher erläutert. Es zeigen:
- Figur 1: eine Draufsicht auf eine erste Ausführungsform eines Kunststoffschlauchs ohne die im Rahmen der Erfindung vorgesehenen Codierungen;
- Figur 2: eine Draufsicht auf eine zweite Ausführungsform eines Kunststoffschlauchs ohne die im Rahmen der Erfindung vorgesehenen Codierungen;
- Figur 3: eine Draufsicht auf eine dritte Ausführungsform eines Kunststoffschlauchs ohne die im Rahmen der Erfindung vorgesehenen Codierungen;
- Figur 4: eine Draufsicht auf eine vierte Ausführungsform eines Kunststoffschlauchs ohne die im Rahmen der Erfindung vorgesehenen Codierungen;
- Figur 5: eine Querschnittsansicht durch einen Kunststoffschlauch längs Linie V-V in den Figuren 1 bis 4;
- Figuren 6 bis 8: jeweils eine schematische Teilansicht einer Vorrichtung;
- Figur 9: eine Draufsicht auf einen Kunststoffschlauch ohne die im Rahmen der Erfindung vorgesehenen Codierungen mit gasgefüllten Füllkörpern und verschweißten Gas-Einfüllöffnungen;
- Figur 10: eine Querschnittsansicht längs Linie X-X in Figur 9;
- Figur 11: eine Perspektivansicht der gasgefüllten Füllkörper aus Figur 9 mit erfindungsgemäßen zusätzlichen Codierungsmarkierungen;
- Figuren 12 bis 14: Darstellungen von Kunststoffschläuchen ähnlich den Figuren 1 bis 5, jedoch mit zusätzlichen erfindungsgemäßen Codierausstanzungen;
- Figur 15: eine Draufsicht auf einen Kunststoffschlauch gemäß einer weiteren Ausführungsform der Erfindung;
- Figur 16: eine schematische Schnittdarstellung einer erfindungsgemäßen Vorrichtung mit kontinuierlicher Arbeitsweise, und
- Figur 17: eine Schnittdarstellung der Gasbefüllungseinrichtung aus Figur 16 entlang der Schnittlinie A-B.

Die in den Figuren dargestellten Ausführungsbeispiele von Kunststoffschläuchen 1 sind aus einem Halbschlauch gefertigt, d.h. aus einer länglichen Kunststofffolie, die längs ihrer Längsachse gefaltet ist, so dass die eine Hälfte der Kunststofffolie als Oberfolie 2 auf der anderen Hälfte als Unterfolie 3 aufliegt. Der Faltrand 4 bildet einen ersten Längsrand, an dem die Oberfolie 2 mit der Unterfolie 3 gasdicht verbunden ist.

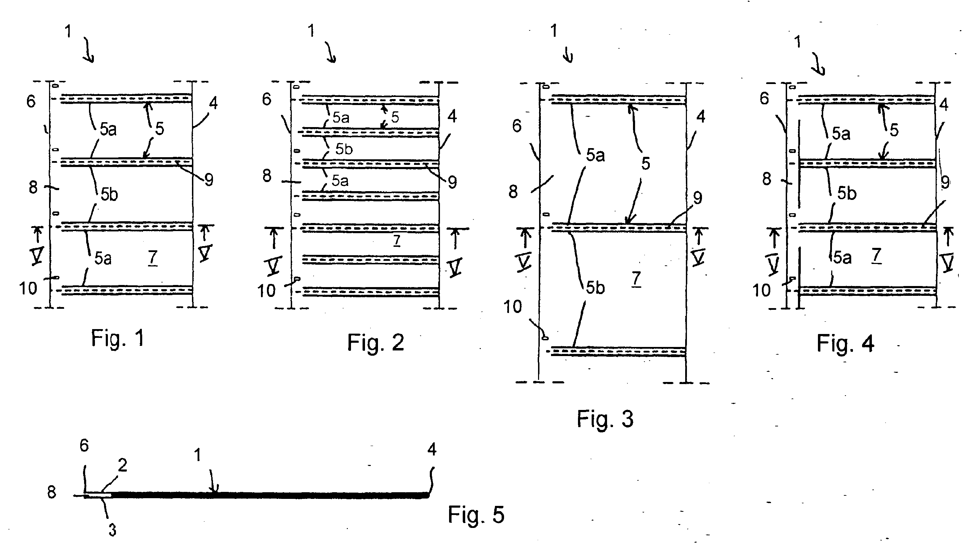

Von diesem ersten Längsrand 4 aus erstrecken sich in Querrichtung Schweißnahtpaare 5 bis zu einem vorgegebenen Abstand vom gegenüberliegenden zweiten, offenen Längsrand 6 (Figur 5). Die Schweißnahtpaare 5 sind in Schlauchlängsrichtung in einer vorgegebenen Entfernung voneinander angeordnet und verbinden die Oberfolie 2 und die Unterfolie 3 ebenfalls gasdicht miteinander. Der erste gasdichte Längsrand 4 und die einander jeweils zugewandten Schweißnähte 5a, 5b benachbarter Schweißnahtpaare 5 bilden gemeinsam sog. Taschen 7 aus. Auf der Seite des zweiten Längsrandes 6 sind die Taschen 7 offen, wodurch eine Gas-Einfüllöffnung 8 für jede Tasche 7 ausgebildet ist, durch jede Tasche bzw. jeder Füllkörper 7 mit Gas aufgeblasen werden kann.

Zwischen den Schweißnähten 5a, 5b jedes Schweißnahtpaares 5 ist jeweils ein Zwischenraum angeordnet, in dem eine Perforationsnaht 9 von dem ersten Längsrand 4 bis zum zweiten Längsrand 6 verläuft.

An dem zweiten Längsrand 6 sind in vorgegebenen Abständen in Schlauchlängsrichtung Markierungen 10 vorgesehen, die in den dargestellten Ausführungsbeispielen als Ausstanzungen ausgebildet sind. Wie in den Figuren 1 bis 3 dargestellt, kann der Abstand zwischen den Schweißnahtpaaren 5 von Kunststoffschlauch 1 zu Kunststoffschlauch 1 variabel sein, um unterschiedlich lange Taschen bzw. Füllkörper 7 herzustellen. Die Markierungen 10 zeigen die Lage der Schweißnahtpaare 5 an, wobei, wie beispielsweise in Figur 2 dargestellt ist, nicht für jedes Schweißnahtpaar 5 eine Markierung 10 erforderlich ist, da bei einem gleichmäßigen Abstand der Schweißnahtpaare 5 untereinander -je Kunststoffschlauch 1- die Lage von zwischen zwei Markierungen 10 liegenden Schweißnahtpaaren 5 ohne weiteres bestimmt werden kann.

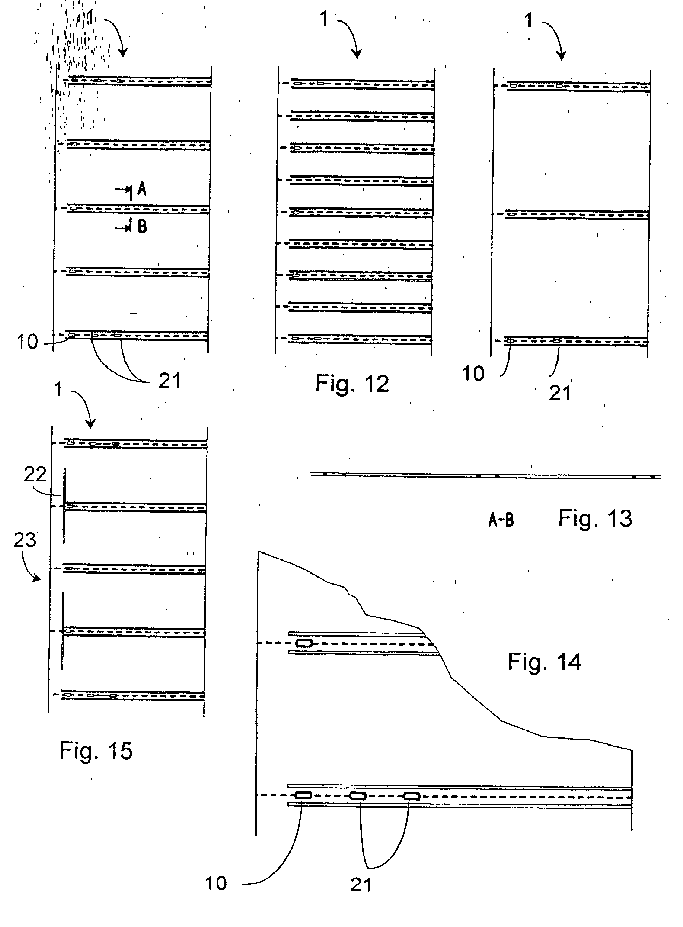

Wie in den Fig. 12 bis 14 dargestellt, weisen die erfindungsgemäßen Taschen zusätzliche Ausstanzungen 21 auf, mittels derer die Eigenschaften des verwendeten Taschenmaterials codiert werden. Dadurch kann die Befüllvorrichtung bei Einlegen des Schlauchmaterials selbsttätig die korrekten Betriebsparameter wie Schweißzeiten, Befüllmengen bzw. -zeiten oder Vorschubstrecken anpassen. Die Ausstanzungen sind bevorzugt in einem vorgegebenen Abstand von dem zweiten Längsrand der Taschen angeordnet, wo sie von entsprechend angeordneten Detektionseinrichtungen der Füllvorrichtung (z.B. Gabellichtschranken) erfasst werden können. Um mit möglichst wenig Markierungen bzw. Detektoren auszukommen, können die Eigenschaften der Taschen in einem Binärcode codiert sein.

In Fig. 15 ist eine Ausführungsform eines im Rahmen der Erfindung verwendbaren Kunststoffschlauchs dargestellt, bei dem der zweite Längsrand bereits teilweise verschweißt ist. Bei dieser Ausgestaltung ist es möglich, zwei nebeneinanderliegende Taschen gleichzeitig zu befüllen und gleichzeitig zu verschweißen, wobei die Befüll- und Schweißwerkzeuge aufgrund der Vorverschweißungen 23 nicht breiter ausgebildet sein müssen als bei den vorstehend beschriebenen Ausführungsformen. Hierdurch kann die Füllgeschwindigkeit um bis zu 100% erhöht werden.

Bei der in Figur 4 dargestellten Ausführungsform ist auch die offene Seite der Taschen 7 im nicht aufgeblasenen Zustand, d.h. im Rahmen der Vorkonfektionierung eines Kunststoffschlauchs 1, teilweise durch eine Längsschweißnaht 11 gasdicht verschlossen. Die Längsschweißnähte 11 erstrecken sich im dargestellten Beispiel von jedem zweiten Schweißnahtpaar 5 aus zu den jeweils benachbarten Schweißnahtpaaren 5 und enden in einem vorgegebenen Abstand von diesen. Der nicht verschweißte Bereich der dem zweiten Längsrand 6 zugewandten Taschenseite bildet dann die Gas-Einfüllöffnung 8 aus. Dies hat den Vorteil, dass die Schweißeinrichtung unabhängig von dem Abstand der Schweißnahtpaare 5, d. h. der Länge der Taschen 7, jeweils nur für eine konstante Schweißnahtlänge ausgelegt sein muss, da die Länge der Gas-Einfüllöffnung 8 konstant gehalten werden kann.

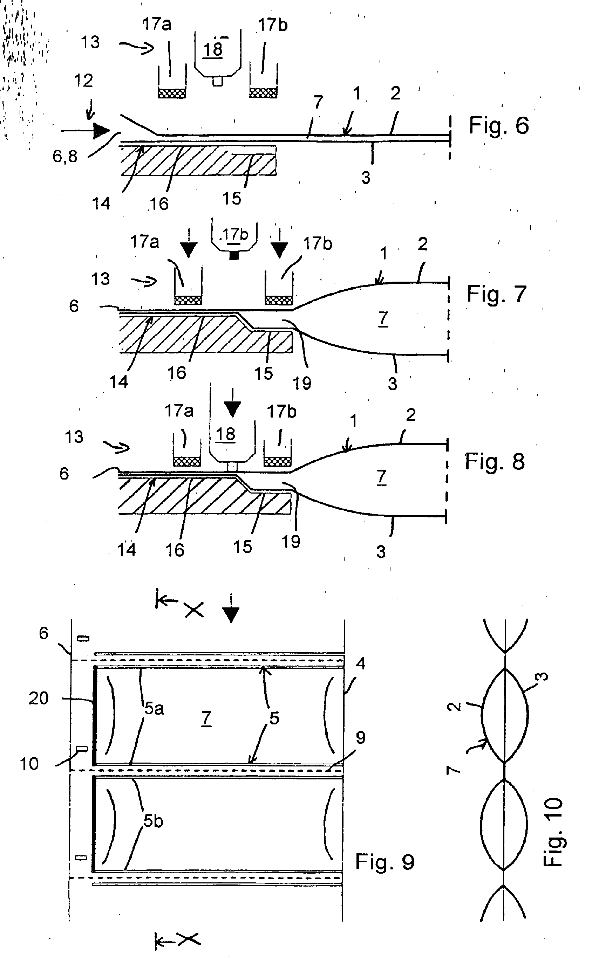

Das Verfahren und eine Ausführungsform einer Vorrichtung mit taktweisem Betrieb werden nachfolgend anhand der Figuren 6 bis 8 beschrieben. Ein vorkonfektionierter Kunststoffschlauch 1 ist als Flachschlauch auf einer Rolle aufgewickelt und wird von der Transporteinrichtung beispielsweise mittels Magnet- oder Pneumatikaktuatoren, die jeweils zwischen den Schweißnähten 5a, 5b eines Schweißnahtpaares 5 am Schlauch 1 angreifen, über eine Spindel von der Rolle gezogen und taktweise zu einer Gasbefüllungseinrichtung 12 und zu einer Schweißeinrichtung 13 transportiert. Im dargestellten Beispiel wird der zweite Längsrand 6 des Kunststoffschlauches 1, d.h. dessen die Gas-Einfüllöffnung 8 enthaltender Bereich, von der Transporteinrichtung zu einer Auflagefläche 14 transportiert, über der die Gasbefüllungseinrichtung 12 und die Schweißeinrichtung 13 angeordnet sind. Dabei zeigen die Markierungen 10 die quer verlaufenden Schweißnähte 5a, 5b an, so dass eine Synchronisation der Maschine nicht erforderlich ist. Die Gasbefüllungseinrichtung 12 bläst mittels einer Düse am offenen zweiten Längsrand 6 im vorliegenden Fall Luft seitlich zwischen die Oberfolie 2 und die Unterfolie 3 und durch die jeweilige Gas- bzw. Luft-Einfüllöffnung 8 in die zugehörige Tasche 7.

Die Auflagefläche 14 weist einen der Tasche 7 zugewandten tiefliegenden Abschnitt 15 und einen von der Tasche 7 abgewandten hochliegenden Abschnitt 16 auf. Die Unterfolie 3 einer aufgeblasenen Tasche 7 legt sich an die Kontur der Auflagefläche 14 an, wie dies in den Figuren 7 und 8 dargestellt ist.

Die Schweißeinrichtung 13 weist zwei quer zur Schlauchlängsrichtung mit Abstand zueinander angeordnete Niederhalter 17a, 17b auf. Der Niederhalter 17a ist über dem hochliegenden Abschnitt 16 der Auflagefläche 14 angeordnet, während der andere Niederhalter 17b über dem tiefliegenden Abschnitt 15 angeordnet ist. Zwischen den Niederhaltern 17a, 17b ist ein Schweißwerkzeug 18 positioniert. Die Niederhalter 17a,b können von einer Ausgangsstellung, in der sie die Oberfolie 2 nicht berühren (Figur 6), in eine Wirkstellung bewegt werden, in der beide Niederhalter 17a, 17b an der Oberfolie 2 anliegen (Figur 7). In dieser Wirkstellung werden die Oberfolie 2 und die Unterfolie 3 auf dem hochliegenden Abschnitt 16 der Auflagefläche 14 aufeinandergedrückt. Beide Niederhalter 17a, 17b sind in derselben Höhe angeordnet, wodurch der über dem tiefliegenden Abschnitt 15 der Auflagefläche 14 positionierte Niederhalter 17b zwischen der Oberfolie 2, an der er anliegt, und der Unterfolie 3, die an dem tiefliegenden Abschnitt 15 der Auflagefläche 14 anliegt, einen Spalt 19 belässt. Hierdurch wird ein glatter bzw. horizontaler Verlauf der Oberfolie 2 zwischen den Niederhaltern 17a, 17b erreicht, da die in diesem Bereich vorhandene Luft in den Freiraum 19 zwischen der Oberfolie 2 und der Unterfolie 3 über dem tiefliegenden Abschnitt 15 der Auflagefläche 14 entweichen kann.

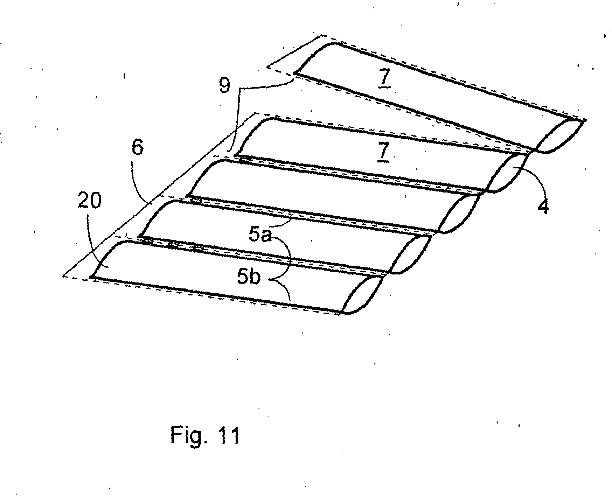

Nachdem die Oberfolie 2 durch die Niederhalter 17 auf dem hochliegenden Abschnitt 16 der Auflagefläche 14 auf die Unterfolie 3 gedrückt ist, wird das Schweißwerkzeug 18 ebenfalls nach unten, d. h. zum Kunststoffschlauch 1 hin, bewegt, um die Oberfolie 2 mit der Unterfolie 3 im Bereich der Luft-Einfüllöffnung 8 luftdicht zu verschweißen (Figur 8). Die dem zweiten Längsrand 6 des Schlauches 1 zugewandte Seite der Tasche 7 bzw. des neu fertiggestellten Füllkörpers ist jetzt - wie die anderen Seiten des Füllkörpers 7 auch - gasdicht verschlossen, wie dies in Figur 9 dargestellt ist. Die aufgeblasenen Füllkörper 7 können nun bei Bedarf an der Perforationsnaht 9 vom Schlauch 1 abgetrennt werden (Figur 11).

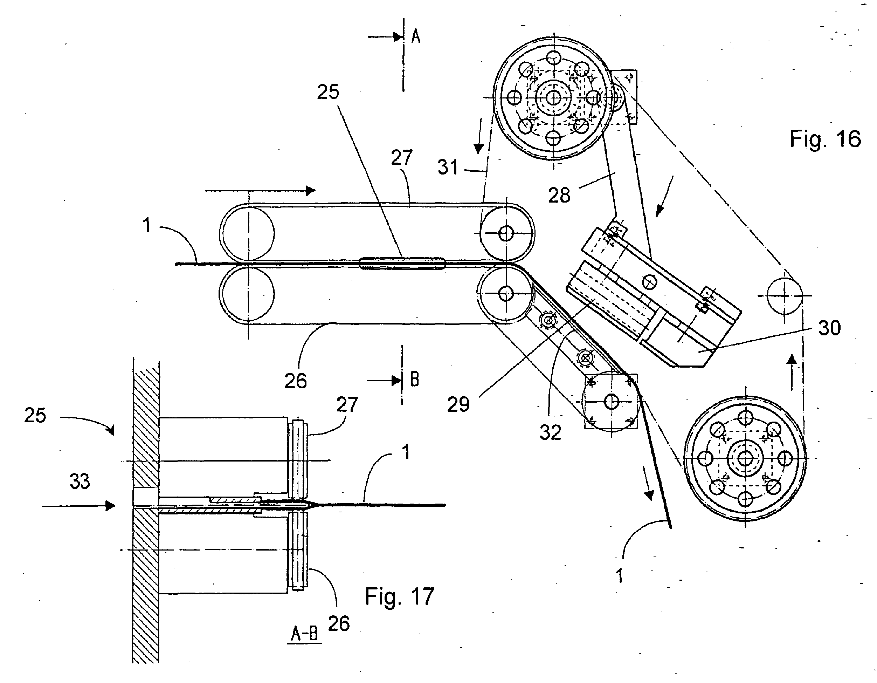

In Fig. 16 ist eine kontinuierlich arbeitende Ausführungsform der Vorrichtung dargestellt. Der vorkonfektionierte Kunststoffschlauch 1 wird von einer Rolle oder dgl. (nicht dargestellt) zugeführt. In einem ersten Transportbereich wird die Folie von zwei Treibriemen 26, 27 an einer Gasbefüllungseinrichtung 25 vorbei geführt, die detaillierter in Fig. 17 dargestellt ist. Die Gasbefüllungseinrichtung trennt Ober- und Unterfolie des vorkonfektionierten Kunststoffschlauchs und bläst durch die so entstandene Öffnung Luft ein. Außerhalb der Gasbefüllungseinrichtung werden Ober- und Unterfolie durch die Treibriemen 26, 27 zusammengehalten, so dass die eingeblasene Luft nicht entweicht. In einem zweiten Transportbereich wird der vorkonfektionierte Kunststoffschlauch an seinem zweiten Längsrand kontinuierlich verschweißt. Dazu wird der Kunststoffschlauch auf seiner Vorderseite von einem Heizband 31 aus tefloniertem Metall geführt. Dieses Heizband wird von einer elektrisch beheizten Schweißkufe 28 in einem Schweißbereich beheizt. Die Schweißkufe 28 in Fig. 16 in einem angehobenen Zustand dargestellt. In diesem Zustand befindet sich die Schweißkufe 28 nur bei Stillstand der Anlage; bei Betrieb liegt die Schweißkufe mit einem Heizbereich 29 aus Messing gegen das Metallband 31 an, das die Wärme in einem vorgegebenen Schweißbereich auf den Kunststoffschlauch überträgt. Um ein Aufheizen des Heizbandes entlang seines gesamten Umfanges zu vermeiden und eine gleichmäßige Schweißqualität zu gewährleisten, ist in Förderrichtung hinter der Schweißkufe 29 eine Kühleinrichtung vorgesehen (z.B. mit Peltier-Elementen arbeitend), durch die dem Heizband die Wärme relativ schnell wieder entzogen wird. Auf der Rückseite wird der Kunststoffschlauch von einem Triebriemen 32 geführt. Die in Fig. 16 dargestellten Riemen 26, 27 bzw. 31, 32 sind jeweils axial in der Zeichnungsebene gegeneinander versetzt. Weiterhin sind erste und zweite Transportstrecken um einen vorgegebenen stumpfen Winkel - z.B. vorzugsweise 45° - gegeneinander geneigt. Diese Anordnung führt zu einem störungsfreieren Lauf des Kunststoffschlauchs. Durch die beim Schweißvorgang auftretende Schrumpfung würde nämlich bei komplett gerader Führung Folienmaterial aus dem ersten Transportbereich herausgezogen, was dort zu Störungen führt. Dies wird bei einer winkligen Anordnung weitgehend vermieden. Die vorstehend beschriebene kontinuierlich arbeitende Ausführungsform kann gegenüber einer taktweise arbeitenden Vorrichtung mit ähnlichen Komponenten einen tendenziell höheren Ausstoß an Füllkörpern erbringen, da bei der kontinuierlich arbeitenden Vorrichtung Transporttakte entfallen können. Im Gegensatz zur taktweise arbeitenden Vorrichtung muss bei der kontinuierlich arbeitenden Vorrichtung nach dem Schweißvorgang und vor dem Weitertransport nicht abgewartet werden, bis die Schweißnaht ausreichend abgekühlt ist.

## Patentansprüche

1. Kunststoffschlauch zur Herstellung gasgefüllter Füllkörper, mit zwei übereinanderliegenden Folien, die an einem ersten ihrer Längsränder gasdicht miteinander verbunden sind, wobei die Oberfolie (2) und die Unterfolie (3) zur Ausbildung aufblasbarer Taschen (7) in Querrichtung durch mit Abstand zueinander angeordnete Paare (5) gasdichter Schweißnähte (5a, 5b) miteinander verschweißt sind, die sich von dem ersten Längsrand (4) aus bis zu einer vorgegebenen Entfernung von dem gegenüberliegenden, zweiten Längsrand (6) erstrecken, und wobei zwischen den Schweißnähten (5a, 5b) jedes Schweißnahtpaares (5) ein Zwischenraum mit einer Perforation (9) vorhanden ist, wobei die Taschen (7) zur Ausbildung einer Gas-Einfüllöffnung (8) jeweils wenigstens in einem Teilabschnitt ihres zweiten Längsrandes (6) offen ausgebildet sind,
**dadurch gekennzeichnet, dass**
auf allen oder einem Teil der Perforationen (9) zusätzliche Ausstanzungen (10, 21) vorgesehen sind, mittels derer die Eigenschaften des verwendeten Taschenmaterials codiert werden.

2. Kunststoffschlauch nach Anspruch 1,
**dadurch gekennzeichnet, dass**
auf allen Perforationen (9) eine Codierung bildende Ausstanzungen (10, 21) zur Anzeige der Foliendicke und/oder zur Anzeige der Folienbreite und/oder zur Anzeige der Schweißzeit und/oder der Schweißtemperatur angeordnet sind.

3. Kunststoffschlauch nach Anspruch 1 oder 2, **dadurch gekennzeichnet, dass** im Bereich der Perforation (9) zumindest in der Nähe der Längsränder (4, 6) Ausstanzungen zum Eingreifen eines Dorns für den Weitertransport des Kunststoffschlauchs (1) vorgesehen sind.

4. Kunststoffschlauch nach einem der Ansprüche 1 bis 3, **dadurch gekennzeichnet, dass** die Eigenschaften der Taschen (7) in einem Binärcode codiert sind.

5. Vorrichtung zum Befüllen eines gasgefüllten Füllkörper, wobei das Befüllen die (folgenden Schritte umfasst:
a) Bereitstellen eines vorkonfektionierten Kunststoffschlauchs (1) gemäß einem der Ansprüche 1 bis 4;
b) Einblasen von Luft oder einem anderen Füllgas nacheinander in jede Tasche (7) durch die Gas-Einfüllöffnung (8), die als offener Abschnitt im zweiten Längsrand der jeweiligen Tasche ausgebildet ist, und
c) gasdichte Verschweißen der Gas-Einfüllöffnung (8) der gasgefüllten Tasche (7),
und wobei die Vorrichtung aufweist:
- eine Halterung für einen Kunststoffschlauchvorrat,
- eine Transporteinrichtung zum Transport des Kunststoffschlauches durch die Vorrichtung
- eine Gasbefüllungseinrichtung (12), die am zweiten Längsrand (6) des durchlaufenden Kunststoffschlauches (1) angeordnet ist und eine Düse aufweist, mit der Luft oder ein anderes Füllgas in die Gas-Einfüllöffnung (8) der Tasche (7) einblasbar ist, und
- eine Schweißeinrichtung (13), die ebenfalls am zweiten Längsrand (6) angeordnet ist und ein Schweißwerkzeug (18) aufweist, mit dem die Gas-Einfüllöffnung (8) einer Tasche (7) mit einer in Schlauchlängsrichtung verlaufenden Schweißnaht (20) gasdicht verschließbar ist,
**dadurch gekennzeichnet, dass**
die Vorrichtung Erkennungseinrichtungen zur Detektion der Codierungen in den Taschen und zur entsprechenden Steuerung der Vorrichtung aufweist.

## Claims

1. Plastic tube for manufacturing of air-filled bodies, with two films which are located one above the other and are connected to each other in a gastight manner at a first of the longitudinal edges thereof, wherein, in order to form inflatable pockets (7), the upper film (2) and the lower film (3) are welded to each other in the transverse direction by pairs (5) of gastight weld seams (5a, 5b) arranged at a distance from one another, said weld seams extending from the first longitudinal edge (4) as far as a predetermined distance from the opposite, second longitudinal edge (6), and wherein there is an intermediate space with a perforation (9) between the weld seams (5a, 5b) of each weld seam pair (5), and wherein the pockets (7) are each designed to be open at least in a partial section of the second longitudinal edge (6) thereof in order to form a gas filling opening (8), **characterized in that** additional punched-out portions (10, 21) are provided on all or some of the perforations (9) and are used to code the properties of the pocket material used.

2. Plastic tube according to Claim 1, **characterized in that** punched-out portions (10, 21) forming a coding are arranged on all of the perforations (9) in order to indicate the film thickness and/or in order to indicate the film width and/or in order to indicate the welding time and/or the welding temperature.

3. Plastic tube according to Claim 1 or 2, **characterized in that** punched-out portions for the engagement of a spike for the further transportation of the plastic tube (1) are provided in the region of the perforation (9) at least in the vicinity of the longitudinal edges (4, 6).

4. Plastic tube according to one of Claims 1 to 3, **characterized in that** the properties of the pockets (7) are coded in a binary code.

5. Device for filling an air-filled body, wherein the filling comprises the following steps:
a) providing a preassembled plastic tube (1) as per one of Claims 1 to 4;
b) blowing air or another filling gas successively into each pocket (7) through the gas filling opening (8) which is designed as an open section in the second longitudinal edge of the particular pocket, and
c) welding the gas filling opening (8) of the air-filled pocket (7) in a gastight manner,
and wherein the device has:
- a holder for plastic tube storage,
- a transport device for transporting the plastic tube through the device,
- a gas filling device (12) which is arranged on the second longitudinal edge (6) of the continuous plastic tube (1) and has a nozzle with which air or another filling gas can be blown into the gas filling opening (8) of the pocket (7), and
- a welding device (13) which is likewise arranged on the second longitudinal edge (6) and has a welding tool (18) with which the gas filling opening (8) of a pocket (7) can be closed in a gastight manner by a weld seam (20) running in the longitudinal direction of the tube,
**characterized in that** the device has detection devices for detecting the codings in the pockets and for corresponding control of the device.

## Revendications

1. Tuyau plastique pour la fabrication de corps remplis de gaz, avec deux feuilles superposées qui sont assemblées l'une à l'autre de façon étanche au gaz le long d'un premier de leurs bords longitudinaux, dans lequel la feuille supérieure (2) et la feuille inférieure (3) sont soudées l'une à l'autre par des paires (5) de soudures étanches au gaz (5a, 5b) disposées à distance l'une de l'autre en direction transversale pour former des poches gonflables (7), soudures qui s'étendent du premier bord longitudinal (4) jusqu'à un second bord longitudinal opposé (6) situé à une distance prédéterminée de celui-ci, et dans lequel il se trouve entre les soudures (5a, 5b) de chaque paire de soudures (5) un espace intermédiaire avec une perforation (9), dans lequel les poches (7) sont ouvertes chaque fois au moins dans un segment partiel de leur second bord longitudinal (6) pour former une entrée de remplissage de gaz (8), **caractérisé en ce qu'**il est prévu, sur toutes les perforations (9) ou sur une partie de celles-ci, des découpes supplémentaires (10, 21), au moyen desquelles les propriétés de la matière de poche utilisée sont codées.

2. Tuyau plastique selon la revendication 1, **caractérisé en ce que** des découpes (10, 21) formant un codage sont disposées sur toutes les perforations (9) pour afficher l'épaisseur des feuilles et/ou pour afficher la largeur des feuilles et/ou pour afficher le temps de soudage et/ou la température de soudage.

3. Tuyau plastique selon la revendication 1 ou 2, **caractérisé en ce qu'**il est prévu, dans la région de la perforation (9), au moins à proximité des bords longitudinaux (4, 6), des découpes permettant d'accrocher une épine pour le transport du tuyau plastique (1).

4. Tuyau plastique selon l'une quelconque des revendications 1 à 3, **caractérisé en ce que** les propriétés des poches (7) sont codées selon un code binaire.

5. Dispositif pour remplir un corps rempli de gaz, avec lequel le remplissage comprend les étapes suivantes:
a) préparer un tuyau plastique (1) préfabriqué selon l'une quelconque des revendications 1 à 4;
b) insuffler de l'air ou un autre gaz de remplissage successivement dans chaque poche (7) à travers l'ouverture de remplissage de gaz (8), qui est formée par un segment ouvert dans le second bord longitudinal de chaque poche, et
c) souder de façon étanche au gaz l'ouverture de remplissage de gaz (8) de la poche (7) remplie de gaz,
et dans lequel le dispositif comporte:
- un support pour une réserve de tuyau plastique;
- un système de transport pour le transport du tuyau plastique à travers le dispositif,
- un système de remplissage de gaz (12), qui est disposé sur le second bord longitudinal (6) du tuyau plastique en défilement (1) et qui présente une buse, avec laquelle de l'air ou un autre gaz de remplissage peut être insufflé dans l'ouverture de remplissage de gaz (8) de la poche (7), et
- un système de soudage (13), qui est également disposé sur le second bord longitudinal (6) et qui présente un outil de soudage (18), avec lequel l'ouverture de remplissage de gaz (8) d'une poche (7) peut être fermée de façon étanche au gaz par une soudure (20) s'étendant dans la direction longitudinale du tuyau,
**caractérisé en ce que** le dispositif présente des systèmes de reconnaissance permettant de détecter les codages dans les poches et de commander le dispositif de manière correspondante.
